# NEUE EUROPÄISCHE PATENTSCHRIFT

(11) **EP 0 359 805 B2**
(45) Veröffentlichungstag und Bekanntmachung des Hinweises auf die Entscheidung über den Einspruch: **03.09.1997**
(45) Hinweis auf die Patenterteilung: 19.01.1994
(21) Anmeldenummer: 89904037.2
(22) Anmeldetag: 23.03.1989
(51) Int. Cl.: C09D 11/16

(54) **VERWENDUNG VON FESTSTOFFEN ALS ANTIBLOCKADDITIVE FÜR MARKIERFLÜSSIGKEITEN**
USE OF SOLIDS AS ANTIBLOCKING ADDITIVES FOR MARKER LIQUIDS
USAGE DE SOLIDES COMME ADDITIFS ANTIBLOCAGE POUR LIQUIDES D'ECRITURE

(30) Priorität: 24.03.1988 DE 3809898
(43) Veröffentlichungstag der Anmeldung: 28.03.1990
(73) Patentinhaber: DATAPRINT R. Kaufmann KG (GmbH & Co.), D-27753 Delmenhorst (DE)
(72) Erfinder: KAUFMANN, Rainer, D-2000 Hamburg 55 (DE); HERRNRING, Günther, D-2081 Alvesloe (DE)
(74) Vertreter: Köster, Hajo, Dr.
(86) Internationale Anmeldenummer: EP8900321
(87) Internationale Veröffentlichungsnummer: WO8909247

(56) Entgegenhaltungen:
- DE-A- 1 913 174
- DE-A- 2 443 768
- DE-A- 2 802 195
- GB-A- 2 108 991
- JP-A-57 158 273
- JP-A-62 135 578
- US-A- 4 525 216
- Patent Abstracts of Japan, Band 9, Nr. 222, (C302)(1945), 9 September 1985
- Patent Abstracts of Japan, Band 12, Nr. 283, (C-518)(3130), 3 August 1988
- Rotring-Prospekt "Rapidograph ISO mit Kapillarpatrone". Febr. 1983

## Beschreibung

Die Erfindung betrifft die Verwendung von Feststoffen für übliche Markierflüssigkeiten für Schreibgeräte mit üblicher kapillarer Austrittsöffnung als Antiblockadditive zum schützenden und verdunstungshemmenden Verschluß der offenen, ungeschützten und nicht benutzten kapillaren Austrittsöffnung.

Bekanntlich neigen die kapillaren Austrittsöffnungen von Schreib-, Zeichen- und Druckgeräten, Markierstiften sowie Plottern (wird nachstehend allgemein als Schreibgeräte bezeichnet) dazu, sich innerhalb kürzester Zeit zuzusetzen bzw. "einzutrocknen". Die Austrittsöffnungen derartiger Schreibgeräte werden daher im allgemeinen mit einer abdichtenden Kappe oder dergleichen versehen, welche die Verdunstung der flüchtigen Bestandteile der Markierflüssigkeit und somit insbesondere die Verdunstung des Lösungsmittels oder Lösungsmittelgemisches mehr oder weniger wirksam verhindert.

Werden keine derartigen abdichtenden Kappen auf die kapillare Austrittsöffnung aufgesetzt, dann trocknet die Markier-Flüssigkeit natürlich um so schneller ein und verstopft die kapillare Austrittsöffnung.

Um ein schnelles Eintrocknen der Markierflüssigkeit an bzw. in der kapillaren Austrittsöffnung der Schreibgeräte zu verhindern, versetzte man bisher die Markierflüssigkeiten mit flüssigen Zusätzen, die einen geringen Dampfdruck haben und somit nur wenig flüchtig sind. Diese flüssigen Zusätze ermöglichen zudem nach Verdunsten der übrigen flüssigen Anteile der Markierflüssigkeit noch das Wiederanschreiben der Schreibgeräte.

Nachteilig an diesen bekannten, mit flüssigen Zusätzen versetzten Markierflüssigkeiten ist jedoch, daß diese auf nicht saugenden Unterlagen, beispielsweise auf Folien, Glas oder Metall, äußerst schlecht trocknen. Ein weiterer erheblicher Nachteil besteht darin, daß sich, nachdem die leichter flüchtigen Anteile der Markierflüssigkeit an den kapillaren Öffnungen der Schreibgeräte verdunstet sind, die Eigenschaften der Markierflüssigkeit bezüglich der Oberflächenspannung und der Viskosität geändert haben, so daß die Qualität der Aufzeichnung, wie die Randschärfe, das Durchschlagen der Markierflüssigkeit auf die Rückseite einer Unterlage, die Wischfestigkeit usw. beim Wiederanschreiben so lange reduziert ist, bis das ursprüngliche Gemisch der Markierflüssigkeit wieder an der Austrittsöffnung erscheint und austritt.

Aus der GB-A 2 108 991 ist eine pigmentierte Tinte auf Wasserbasis beschrieben, die ein Pigment, ein Dispergiermittel und ein das Austrocknen verhinderndes Agens enthält. Bei dem Dispergiermittel handelt es sich um ein wasserlösliches Aminsalz oder Ammoniumsalz eines Copolymers mit mindestens 50 Mol-% eines hydrophoben, durch Addition polymerisierbaren Monomers und mit weniger als 50 Mol-% Acrylsäure oder Methacrylsäure. Bei dem das Austrocknen verhindernden Agens handelt es sich um Harnstoff, Thioharnstoff oder um ein Derivat davon. Bei dieser bekannten Tinte wird die Dispersionsstabilität des Pigmentes durch den Einsatz des wasserlöslichen Copolymers bzw. Harzes wesentlich verbessert. Das das Austrocknen verhindernde Agens soll der Koagulation des Pigmentes und der Präzipitation des Harzes entgegenwirken.

Aus der JP-A 60-84369 ist eine Tinte für einen Markierstift beschrieben, die einen Alkohol oder Glykol als Lösungsmittel, einen Farbstoff oder ein Pigment und einen Sucroseester enthält. Der Sucroseester soll ein Austrocknen der Schreibspitze an der Luft verhindern.

Die JP-A 63-61065 lehrt, daß man Ascorbinsäure und Derivate davon in Markertinten einsetzen kann und daß die Ascorbinsäure das Austrocknen der Markierflüssigkeit an der Markerspitze verhindert. Dort wird auch expressis verbis angegeben, daß der Grund, warum die dort beschriebene Tinte bzw. Markierflüssigkeit nicht austrocknet, derzeit nicht bekannt sei.

Aufgabe der vorliegenden Erfindung ist es, Markierflüssigkeiten für Schreibgeräte dahingehend zu verbessern, daß sie in der kapillaren Austrittsöffnung nicht mehr eintrocknen, so daß die Schreibgeräte länger schreibfähig bleiben.

Es wurde nun überraschend gefunden, daß man durch die Verwendung von auf bestimmte Weise kristallisierenden Feststoffen in üblichen Markierflüssigkeiten deren Schreibeigenschaften und insbesondere deren Offenlagerfähigkeit erheblich steigern kann. Dies ist deswegen um so überraschender, als man bisher davon ausging, daß Markierflüssigkeiten um so schneller eintrocknen, je höher ihr Feststoffanteil ist.

Gelöst wird die genannte Aufgabe durch die Lehre des Anspruchs 1.

Erfindungsgemäß wird dem üblichen, gegebenenfalls einen Hochsieder aufweisenden Lösungsmittel oder Lösungsmittelgemisch einer Markierflüssigkeit für Schreibgeräte mit üblicher kapillarer Austrittsöffnung ein Feststoff zugegeben. Dieser Feststoff besitzt bei Atmosphärendruck einen Schmelzpunkt ≧ 30 °C und ein Molekulargewicht ≦ 1000 Dalton.

Der erfindungsgemäß verwendete Feststoff muß in dem jeweiligen an sich bekannten und für die hier in Rede stehenden Markierflüssigkeiten üblichen Lösungsmittel bzw Lösungsmittelgemisch, das gegebenenfalls mit einem Hochsieder versetzt ist und an sich bekannte sowie übliche Zusätze aufweisen kann, löslich sein.

Ferner muß der erfindungsgemäß verwendete Feststoff in der Lage sein, aus dem Lösungsmittel oder Lösungsmittelgemisch, falls er alleine darin vorliegt, an der kapillaren Austrittsöffnung unter Bildung auswachsender Kristallite zu kristallisieren. Mit anderen Worten, der Feststoff muß die Fähigkeit besitzen, aus dem Lösungsmittel oder Lösungsmittelgemisch in der genannten Weise auszukristallisieren, wobei das Lösungsmittel oder das Lösungsmittelgemisch keinen Farbstoff oder Pigment, keinen üblichen Zusatz und auch keinen Hochsieder enthalten darf und somit rein oder als reine Mischung vorliegt. Es sei bereits an dieser Stelle betont, daß die genannten Kristallisationseigenschaften zur Definition der eingesetzten Feststoffe dienen.

Als Hochsieder werden im Rahmen der vorliegenden Unterlagen solche an sich bekannten Fiüssigkeiten verstanden, die auf dem hier in Rede stehenden Gebiet üblicherweise Anwendung finden und deren Siedepunkt ≧ 180 °C ist.

Das Lösungsmittel bzw. die Bestandteile des Lösungsmittelgemisches sind solche üblichen zum Lösen und/oder Dispergieren von Farbstoffen und/oder Pigmenten eingesetzten Flüssigkeiten, deren Siedepunkt ≦ 180 °C ist.

Mit dem Begriff Markierflüssigkeit werden hier übliche Aufzeichnungsmittel bezeichnet, beipielsweise Tuschen, Tinten, pigmentierte Tinten, Lacke und fluoreszierende Flüssigkeiten zum Hervorheben von Textstellen (Marker).

Unter Tuschen versteht man im allgemeinen wasserfest auftrocknende schwarze oder bunte Aufzeichnungsflüssigkeiten, die fein dispergierte, ungelöste Pigmente und mindestens ein wasserfest auftrocknendes Harz enthalten.

Tinten enthalten den Farbstoff im allgemeinen in gelöster Form.

Pigmentierte Tinten kann man als dünnflüssige Tuschen bezeichnen, die neben einem dispergierten Pigment gegebenenfalls auch einen Farbstoff in gelöster Form enthalten. Es sind auch bereits fluoreszierende pigmentierte Tinten erhältlich.

Wie man sieht, sind die Übergänge zwischen den einzelnen Aufzeichnungsmitteln fließend. Die enfindungsgemäß verwendeten Feststoffe können in allen derartigen Aufzeichnungsmitteln bzw. Markierflüssigkeiten zu Anwendung gebracht werden.

Aufgrund der Fähigkeit, in dem jeweils zur Anwendung gebrachten Lösungsmittel oder Lösungsmittelgemisch Kristallite beim Auskristallisieren an bzw. in der kapillaren Austrittsöffnung zu bilden, ist der erfindungsgemäß verwendete Feststoff in der Lage, beim Einsatz in einer üblichen Markierflüssigkeit (z.B. Tinte oder Tusche) zusammen mit den weiteren Bestandteilen dieser Markierflüssigkeit an der Grenzfläche der Markierflüssigkeit zur Luft in der kapillaren Austrittsöffnung eine die Verdunstung des Lösungsmittels der Markierflüssigkeit verhindernde flüssig- bis festkristalline Grenzschicht bilden. Mit anderen Worten, durch den Aufbau der genannten kristallinen Grenzschicht wird die Verdunstung der darunter befindlichen Markierflüssigkeit, genauer gesagt des Lösungsmittels, verhindert. Zudem bildet sich eine nur dünne und weiche Grenzschicht aus, die beim Anschreiben und somit beim Ausüben von leichten Druck bei Berührung mit einer Aufzeichnungsunterlage sofort aufreißt bzw. weggerissen wird, so daß die kapillare Austrittsöffnung wieder freigegeben wird und die Markierflüssigkeit wieder ausfließen bzw. austreten kann. Beim Anschreiben treten daher keine Schwierigkeiten auf. Eine Minderung der Strichqualität ist zudem nicht zu bemerken. Die Grenzschicht regeneriert sich bei jeder Beendigung oder Unterbrechung des Schreibvorganges je nach der Flüchtigkeit des Lösungsmittels bedingt durch den Einsatz des erfindungsgemäß verwendeten Feststoffes innerhalb von wenigen Sekunden bis Minuten immer wieder im Verbund mit den übrigen Bestandteilen der Markierflüssigkeit von selbst neu.

Es muß in diesem Zusammenhang betont werden, daß das geschilderte Verhalten dann zu beobachten ist, wenn die Verdunstung des Lösungsmittels der Markierflüssigkeit aus Kapillaren stattfindet, durch welche die Markierflüssigkeit an eine Schreibspitze oder an eine Austrittsöffnung herangeführt wird. Das Auftreten der kristallinen Grenzschicht, die natürlich in Abhängigkeit von der Art und/oder Menge des erfindungsgemäß verwendeten Feststoffes flüssigkristallin bis festkristallin ist, kann man sich in etwa wie folgt erklären, wobei diese Erklärung jedoch nicht verbindlich ist.

Der erfindungsgemäß eingesetzte Feststoff (nachstehend auch als Antiblockadditiv bezeichnet) besitzt in dem zur Anwendung gebrachten Lösungsmittel die oben geschilderten kristallisierenden Eigenschaften. Mit anderen Worten, das eingesetzte Antiblockadditiv besitzt gute kristallisierende Eigenschaften bzw. bildet beim Verdunsten der flüchtigen Bestandteile der Basisflüssigkeit verhältnismäßig gut und zahlreich auswachsende Kristallite. Dieser Vorgang ist - wie gesagt - dann zu beobachten, wenn das Lösungsmittel frei von einem üblichen Farbstoff oder Farbpigment sowie frei von Hochsiedern, Harzen und anderen üblichen Zusätzen ist.

Letzterer Farbstoff, bzw. letzteres Farbpigment besitzt jedoch üblicherweise beim Verdunsten der flüchtigen Bestandteile der Markierflüssigkeit an der kapillaren Austrittsöffnung Eigenschaften, welche quasi den Eigenschaften des Antiblockadditivs diametral entgegenstehen. Der Farbstoff bzw. das Farbpigment sowie die gegebenenfalls vorhandenen Harze und insbesondere die polymeren Harze bilden nämlich keine auswachsenden Kristallite, sondern vereinigen sich an der kapillaren Austrittsöffnung zu einer klebrigen, amorphen und die Austrittsöffnung verschließenden Masse.

Setzt man nun das erfindungsgemäß eingesetzte Antiblockadditiv zusammen mit einem derartigen Farbstoff bzw. einem derartigen Farbpigment und gegebenenfalls einem Harz ein, dann "heben sich die quasi entgegengesetzt gerichteten Kristallisationseigenschaften in etwa auf" und es bildet sich die geschilderte flüssigkristalline bis festkristalline Grenzschicht, die jedoch ohne weiteres beim Wiederanschreiben entfernt wird. Durch die Ausbildung der kristallinen Grenzschicht wird die Offenlagerfähigkeit der mit dem erfindungsgemäß eingesetzten Antiblockadditiv versetzten Markierflüssigkeiten um mindestens den Faktor 2 erhöht. Unter Offenlagerfähigkeit wird im Rahmen der vorliegenden Unterlagen der Zeitraum verstanden, während dessen eine Markierflüssigkeit in einem Standard-Schreibgerät mit kapillarer Austrittsöffnung schreibbereit und somit verwendbar bleibt. Ein derartiges Standard-Schreibgerät besitzt ein Gehäuse mit Luftzuführung und mit einem im Gehäuse untergebrachten kapillaren Tintenspeicher. Die Schreibspitze dieses Standard-Schreibgerätes ist eine Plastikschreibzpitze mit extrudierten ummantelten Kanälen (Kapillaren), die mit dem Tintenspeicher in Verbindung stehen.Derartige Standard-Schreibgeräte sind bekannt und im Handel erhältlich.

Die hier gemachten Angaben bezüglich der Offenlagerfähigkeit beziehen sich auf einen Feinschreiber mit einer typischen Spitze und einem typischen Speicher, nämlich
- Spitze:: Plastiknib PN - 0.8 x 30 mm erhältlich von der Firma Teibow, Tokio
- Speicher:: Polyesterfaser mit Polyester-Ummantelung 6.5 x 90 mm, Type FF 11495; Lieferant: Firma Filtrona, Reinbeck bei Hamburg
Das Antiblockadditiv wird in einer Menge von 1 bis 50 Gew.-%, zweckmäßigerweise in einer Menge von 1 bis 20 Gew.-% und insbesondere in einer Menge von 5 bis 10 Gew.-%, bezogen auf die Endzusammensetzung der Markierflüssigkeit, zur Anwendung gebracht.

Das erfindungsgemäß eingesetzte Antiblockadditiv besitzt vorzugsweise einen Schmelzpunkt ≧ 50 °C und hat vorzugsweise ein Molekulargewicht ≦ 500 Dalton.

Das Antiblockadditiv bzw. der erfindungsgemäß eingesetzte Feststoff ist vorzugsweise ein anorganisches Salz, eine organische Säure oder ein Derivat davon, eine Aminosäure (insbesondere α- oder β-Aminosäure) oder ein Derivat davon, eine iso-, poly- oder heterocyclische Verbindung oder ein Derivat davon oder eine Schwefelverbindung.

Ausgenommen sind jedoch die folgenden Verbindungen und Verbindungsklassen:
Zucker, Zuckerderivate, Ascorbinsäure, Ascorbinsäurederivate, Harnstoff, Harnstoffderivate einschließlich Ethylenharnstoff, Thioharnstoff, Thioharnstoffderivate, Alkylamide der Formel R-C(O)-NH₂ mit R=Alkyl und Hexandiol-1,6. Unter den Derivaten werden im Rahmen der vorliegenden Unterlagen im übrigen übliche Derivate verstanden.

Als Antiblockadditive kann man beispielsweise einsetzen:
1. Organische Säuren und deren Derivate, wie Citronensäure, Salicylsäure, Benzoesäure, Acetylsalicylsäure, Carbamidsäuremethylester, Salicylsäureamid, DL-Äpfelsäure, Gallussäure, Gallussäureethylester, Cholsäure, Glutarsäureanhydrid, Malonsäure, 1-Hydroxy-2-naphthoesäure, 6-Aminocapronsäure, Azelainsäure, Benzilsäure, 2-Benzoylbenzoesäure, Betain-Monohydrat, 4-tert-Butylbenzoezäure, Citrazinzäure, Diethylentriaminpentaessigsäure, Diethylmalonsäure, Dodecandisäure, Glykolsäure, Iminodiessigsäure, Bernsteinsäure, Itaconsäure, Korksäure, o-Kresotinsäure, DL-Mandelsäure, 2 Methoxybenzoesäure, Nitriloessigsäure-Trinatriumsalz, Sorbinsäure, o-Toluylsäure, Trimesinsäure, 3,4,5-Trimethoxy benzoesäure, Veratrumsäure, L(+)-Weinsäure und L(+)-Weinsäuredimethylester.
2. Aminosäuren und deren Derivate, wie Glycin, Histidin, L-Tyrosin, Glycyl-Glycin, Phenylglycin, β-Alanin, DL-Lysin, DL-Pyroglutaminsäure, Sarcosin, L-Serin, DL-Alanin, L-Arginin.
3. Isocyklische Verbindungen und deren Derivate, wie 3,5-Dihydroxybenzoesäure, Phenylessigsäure, Diphenylcarbonat, Diphenylcarbinol, Benzoin, Azoxyanisol, Resorcin, α-Naphthol, Acetessigsäureanilid, Acetanilid, 3-Aminoacetophenon, 4-Aminodiphenylether, 4-Aminosalicylsäure-Natriumsalz, p-Anissäure, Anthranilsäure, Benzamid, Benzoesäure-phenylester, Benzolsufonamid, 1H-Benzotriazol, Biphenyl, Cyclododecanol, Cyclododecanon, 4,4'-Diaminodicyclohexylmethan, 4,4'-Diaminodiphenylether, 4,4',Diaminodiphenylmethan, N,N'-Dibenzylethylendiamin-diacetat, 2,5-Di-tert-butyl-hydrochinon, 2,4-Dihydroxybenzophenon, 2,2'-Dihydroxy-biphenyl, 2,5-Dimethoxy-anilin, 3,5-Dinitro-benzoesäure, Dural, Gerbsäure, 4-Hydroxy-biphenyl, N-Hydroxyphtalimid, 4-Hydroxy-propiophenon, Isophtalsäuredimethylester, Isovanillin, Keton-Moschus, 3-Nitro-acetophenon, 4-Nitro-anisol, 4-Nitro-benzoesäure-methylester, 3-Nitrobenzolsulfonsäure, 5-Nitro-isophtalsäure, Phenacetin, ±-1-Phenyl-1,2-ethandiol, 1-Phenyl-semicarbazid, Phenyltrimethylammoniumchlorid, Phloroglucin, Phtalsäure, Pyrogallol, Pyromellitsäure, Salicylsäureamid, N,N,N',N'-Tetramethyl-4,4'-diamino-diphenylmethan, Toluol-4-sulfonsäure Natriumsalz, 2,4,6-Trimethylphenol, Vanillin.
4. Polycyklische Verbindungen und deren Derivate, wie Dihydroanthracen, Fluoren, Phenanthren, Cholesteryl-acetat, Methyl-2-naphthylether, Fluorenon, β-Sitosterin, Cholesterin, Abietinsäure, Alizarin, 1-Aminoanthrachinon, 6-Amino-4-hydroxy-2-naphthalinsulfonsäure, Chinoxalin, Dehydrocholsäure, Deoxycholsäure, 1,4-Diamino-anthrachinon, 1,4-Dihydroxy-anthrachinon, 1,5-Dihydroxy-naphthalin, 3-Hydroxy-2-naphtholsäure, Naphthalin-1,5-disulfonsäure Dinatriumsalz, 2-Naphthoxy-essigsäure, 1-Naphthylacetamid, 1-Naphthylamin-5-sulfonsäure.
5. Heterozyklische Verbindungen und deren Derivate, wie 2-Phenyl-2-imidazolin, Imidazol, Hexamethylentetramin, Carbazol, Acetaldehydammoniak, Allantoin, 2-Amino-pyrimidin, Antipyrin, Nicotinsäureamid, 5-Nitro-2-Furfuroldiacetat, 2-Phenyl-indol, 1-Phenyl-3-pyrazolidon, Phthalazon, Phthalid, Phthalimid, 2-Picolinsäure, 7-(2,3-Dihydroxypropyl)-theophyllin, Diphenylenoxid, Fluorescein, 8-Hydroxy-chinolin, Iminodibenzyl, Isatin, 4,4'-Methylen-diantipyrin, 2-Methyl-imidazol, 3-Methyl-1-phenyl-2-pyrazolin-5-on, 2-Methyl-piperazin, 4(6)-Methyl-2-thiouracil, 4-methyl-umbelliferon, Succinimid, cis-1,2,3,6-Tetrahydrophthalsäureanhydrid, 2,3,5,6-Tetramethyl-pyrazin, 1,2,4-Triazol, Benzimidazol.
6. Ureate und deren Derivate, wie N-Acetylglycin, Semi-carbazid-hydrochlorid.
7. Acyklische Verbindungen und Schwefelverbindungen, wie Dimethylsulfon, Pentaerythrit, 2,5-Dimethyl-2,5-hexandiol, 2,2-Dimethyl-1,3-propandiol, N,N'-Diphenylguanidin, Natriumcyclohexansulfamat, Acetamid, Acetessigsäureamid, Ammoniumsulfamat, Hexadecylamin, Isothionsäure Natriumsalz, Taurin, Tetraethylammoniumbromid, Tetramethylammoniumbromid, Thiophen-2-carbonsäure, Tris-(hydroxymethyl)-aminomethan.
8. Anorganische Salze, insbesondere Ammoniumsalze, wie Diammoniumhydrogenphosphat. Besonders geeignete Antiblockadditive sind: Phenanthren, Diphenylcarbinol, 3,5-Dihydroxybenzoesäure, Dimethylysulfon, Cholsäure, Salicylsäure und Carbamidsäuremethylester.

Übliche Lösungsmittel für Markierflüssigkeiten sind beispielsweise:
Wasser, aliphatische Alkohole mit 1 bis 4 Kohlenstoffatomen, wie Methylalkohol, Ethylalkohol, n-Propylalkohol, Isopropylalkohol, n-Butylalkohol, sec.-Butylalkohol, tert, Butylalkohol und Isobutylalkohol: Amide wie Dimethylformamid und Dimethylacetamid; Ketone und Ketoalkohole, wie Ethylmethylketon und Diacetonalkohol, Ether wie Tetrahydrofuran und Dioxan; Polyalkylenglykole und Polypropylenglykole; Alkylenglykole mit 2 bis 6 Kohlenstoffatomen im Alkylenrest, wie Ethylenglykol, Propylenglykol, Diethylenglykol, 1,2,6-Hexantriol, Glycerin, Ether vom Ethylenglykol und Propylenglykol, N-Methyl-2-pyrrolidon, 1,3 Dimethyl-2-imidazolidinon, Propylencarbonat, Ethylencarbonat, Ester der Kohlensäure, Essigsäure, Milchsäure, Citronensäure und Propionsäure, Dimethylsulfoxid, Toluol, Xylol, Trichlorethan und Tetrachlorethylen.

Um als Antiblockadditiv Anwendung finden zu können, muß der erfindungsgemäß eingesetzte Feststoff in dem jeweiligen zur Anwendung gebrachten Lösungsmittel löslich sein und an bzw. in der kapillaren Austrittsöffnung in der beschriebenen Art und Weise kristallisieren.

Die Markierflüssigkeit kann neben einem der oben beschriebenen Lösungsmittel auch weitere übliche Zusätze enthalten, wozu zählen; Netzmittel, Korrosionsschutzmittel, Verdickungsmittel, Konservierungsmittel und Dispersionsmittel, wobei insbesondere polymere Dispersionsmittel Anwendung finden.

Die erfindungsgemäß verwendeten Antiblockadditive finden insbesondere Anwendung bei wässrigen Tinten auf Wasserbasis, wobei das Lösungsmittel Wasser ggf. mit einem üblichen Alkohol, Glykol, Glykolether oder -ester und/oder mit mit Wasser mischbaren hochsiedenden üblichen Lösungsmitteln versetzt ist.

Als farbgebende Komponente bzw. Farbstoff finden Anwendung: Pigmente, Azofarbstoffe, Metallkomplexfarbstoffe, Triarylmethan und verwandte Farbstoffe, Phthalocyaninfarbstoffe, Säurefarbstoffe, Antrachinon und verwandte Farbstoffe und/oder Fluorenzfarbstoffe.

Für derartige wässrige Tinten eignen sich als Antiblockadditive insbesondere Carbamidsäurederivate sowie Dimethylsulfon.

Eine derartige wässrige Tinte kann weiterhin die oben aufgeführten üblichen Zusätze enthalten.

Als Antiblockadditive sind insbesondere folgende Verbindungen einsetzbar:
Carbamidsäuremethylester H₂NCOOCH₃
Glycin H₂NCH₂COOH
Diglycin H₂NCH₂CONHCH₂
Phenylglycin C₆H₅CH(NH₂)CH₂COOH
DL-Alanin CH₃CH(NH₂)COOH 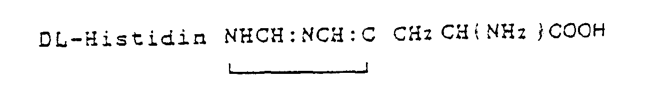 DL-Tyrosin HOC₆H₄CH₂CH(NH₂)COOH
Imidazol
Ein weiteres Anwendungsgebiet der erfindungsgemäß verwendeten Antiblockadditive sind nicht-wässrige Tinten und Tuschen, die als Lösungsmittel Alkohole, Ether und/oder Ester enthalten, wobei ggf. ein Wasserzusatz und auch hochsiedende Komponenten (Hochsieder) sowie Harze vorhanden sein können.

Die farbgebende Komponente kann bei diesen nicht-wässrigen Tinten und Tuschen aus den gleichen Gruppen von Verbindungen wie bei den oben geschilderten wässrigen Tinten stammen. Gleiches gilt für die weiteren üblichen Zusätze.

Als Antiblockadditive für derartige nicht-wässrige Tinten und Tuschen eignen sich insbesondere Phenanthren und die Derivate davon, Benzoesäure und die Derivate davon sowie isocyclische, polycyclische und heterocyclische organische Verbindungen.

Die Erfindung wird nachstehend unter Bezugnahme auf die schematischen Zeichnungen näher erläutert. In den Zeichnungen zeigen:
- Fig. 1: einen Schnitt durch ein kapillares Zuführungsrohr eines Schreib-, Zeichen- oder Druckgerätes und
- Fig. 2a und b: Handschreibgeräte mit Schreibspitzen, von denen eines mit einem Lösungsmittel, das ein Antiblockadditiv enthält, und das andere mit einem eine Polymersubstanz enthaltenden Lösungsmittel gefüllt ist.

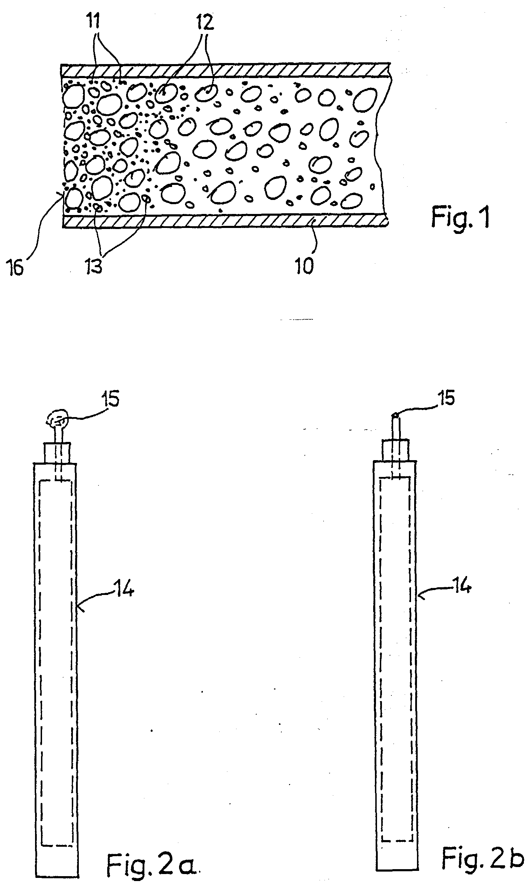

Wie schon dargelegt, haben am Zustandekommen der Grenzschicht und der Sperrwirkung der Grenzschicht gegen die Verdunstung des Lösungsmittels die Kapillaren einen wesentlichen Anteil, durch die die Markierflüssigkeit an die Schreibspitze oder die Austrittsöffnung eines Tinten-Druckgerätes herangeführt wird. Beispielsweise bildet sich an der Flüssigkeitsoberfläche der Markierflüssigkeit, wenn diese in ein Becherglas gegeben wird, keine Grenzschicht bzw. Haut, da die freie Beweglichkeit der Moleküle für eine gleichmäßige Konzentration aller Bestandteile der Markierflüssigkeit im ganzen Becherglas sorgt. In Kapillaren 10 dagegen findet ein Konzentrationsausgleich nur sehr langsam start, wodurch die flüssig- bis festkristalline Grenzschicht erst zustande kommen kann. Die Verdunstungsvorgänge an der Oberfläche der kristallinen Grenzschicht sind hauptsächlich deshalb so stark vermindert, weil die Moleküle des Antiblockadditives 13 und die übrigen Bestandteile der Markierflüssigkeit, beispielsweise der Farbstoff 12, die nicht verdunsten, den größten Teil der Oberfläche ausfüllen, D.h., die Verdunstungsoberfläche für den flüchtigen Anteii der Markierflüssigkeit wird äußerst klein und damit auch die Verdunstungsmenge seibst. Außerdem kann angenommen werden, daß die Beweglichkeit der Moleküle des flüchtigen Lösungsmittels 11 der Markierflüssigkeit im Kristallverbund geringer ist als in der Markierflüssigkeit selbst, wodurch noch einmal die Flüchtigkeit herabgesetzt wird, vgl. dazu die Fig. 1.

Ganz andere Verhältnisse herrschen, wenn die Markierflüssigkeit auf eine nicht saugende Unterlage, beispielsweise eine Folie aufgetragen wurde. Zum einen können hier vergleichbare kapillare Erscheinungen nicht auftreten und zum anderen ist das Verhältnis der Dicke des Auftrags der Markierflüssigkeit zur Strichbreite für einen Verdunstungsvorgang sehr günstig. Zwar wird auch hier der flüssig-kristalline Zustand durchlaufen, doch geschieht dies so schnell, daß der Benutzer eines Schreibgerätes keinen Unterschied zwischen der Markierflüssigkeit mit oder ohne dem erfindungsgemäß verwendeten Antiblockadditiv in Bezug auf die Trockenzeit auf der Unterlage bemerkt. Durch Ausnutzung der vorbeschriebenen physikalischen Zusammenhänge ist es erfindungsgemäß möglich, Markierflüssigkeiten zu schaffen, die auf Foiien innerhalb von wenigen Sekunden wischfest sind, im Gerät jedoch bei offener Lagerung ohne Kappe oder dergleichen über eine Woche so gut anschreibbereit bleiben, daß ein Unterschied gegenüber dem sofortigen Anschreiben nicht erkennbar ist.

Bei wässrigen Markierflüssigkeiten mit einer zusätzlichen hochsiedenden Komponente als Zusatz kann man eine mehrere Wochen währende Anschreibebereitschaft erreichen, ohne daß die Qualität zu Beginn des Anschreibens merklich nachläßt. Im Gegensatz zu normalen Markierflüssigkeiten wie wässrigen Tinten mit Hochsiedern bleibt das Hochsieder/wasserverhältnis über Wochen hinter der Grenzschicht nahezu konstant.

Mit der erfindungsgemäßen Markierflüssigkeit kann beispielsweise die bisher erforderliche mechanische Kappe zur Verhinderung des Eintrocknens der Markierflüssigkeit bei Schreibgeräten durch besagte Grenzschicht ersetzt werden, die die Markierflüssigkeit selbst erzeugt, und zwar auch bei solchen Markierflüzzigkeiten, die allgemein unter dem Begriff Zeichentuschen zusammengefaßt werden und die als farbgebende Komponente bzw. als Farbstoff Rußpartikel oder andere Farbstoffpigmente aufweisen.

Unter Bezugnahme auf die Darstellung der Fig. 2a und b können die physikalischen Zusammenhänge vom Aufbau der verdunstungsverhindernden Grenzschicht bei Markierflüssigkeiten dargestellt werden. In zwei Faserschreibgeräte 14, die jeweils Schreibspitzen 15 aufweisen, werden jeweils wässrige Lösungen eingefüllt. Im ersten Faserschreibgerät 14 befinden sich 10 % Harnstoff in Wasser gelöst, Fig. 2a. Im zweiten Faserschreibgerät 14 befindet sich Wasser mit 2 % Polyvinylpyrrolidon K 15 (MW ca. 10.000), Fig. 2b. Werden nun diese zwei Faserschreibgeräte 14 offen ohne mechanische Kappe stehengelassen, so wird folgendes beobachtet:

An der Spitze 15, d.h. an der Austrittsöffnung 16 des Faserschreibgerätes 14 gem. Fig. 2a erwachsen Kristalle schalenförmig und schichtweise übereinander, deren Wachstum erst beendet ist, wenn das ganze Wasser aus dem Faserschreibgerät 14 verdunstet ist. Die Spitze 15 unter dem Kristallbündel ist fortwährend feucht und beim Entfernen des Kristallbündels anschreibbereit.

Beim Faserschreibgerät 14 gem. Fig. 2b ist äußerlich nichts zu bemerken, jedoch ist die Spitze 15 spätestens innerhalb einer Stunde in der Weise eingetrocknet, wie es bisher bei Schreibgeräten bekannterweise häufig vorkommt. Ein Anschreiben mit einer derartigen Markierflüssigkeit ist nach einstündigem Offenstehen der kapillaren Austrittsöffnung 16 nicht mehr möglich.

Mischt man nun die Fiüssigkeiten der Faserschreibgeräte 14 gem. Fig. 2a und Fig. 2b und füllt dieses entstehende Gemisch in ein Faserschreibgerät ein, dann stellt man fest, daß an der Spitze 15 äußerlich nichts sichtbar ist. Jedoch kann man mit diesem Faserschreibgerät 14 noch nach vielen Tagen schreiben. In diesem Fall hat sich nämlich die verdunstungsverhindernde Grenzschicht gebildet, die nicht auswächst und mit einem leichten Andruck der Spitze 15 auf einer hier nicht gezeigten Unterlage für die schreibende Person unbemerkbar aufreißt und sofort einen kontinuierlichen Fluß der Markierflüssigkeit ermöglicht.

Aus diesen Experimenten ist ersichtlich, daß sich die zwei gegenläufigen Erscheinungen aufheben können, nämlich einmal das nicht endenwollende Ausblühen der Harnstoffkristalle und zum anderen das Verkleben der Polyvinylpyrrolidonmoleküle, die ein Anschreiben nach kurzer Zeit schon unmöglich machen. Die auskristallisierenden Moleküle legen sich also zwischen die anderen größeren Moleküle, vgl. Fig. 1 und verhindern dort das Verkleben. Dazu kommt noch ein Teil des Lösungsmittels, in diesem Falle Wasser, das dafür sorgt, daß die verdunstungshemmende Schicht eine flüssigkristalline Struktur bekommt.

Im vorbeschriebenen Beispiel steht das Polyvinylpyrrolidon steilvertretend für einen Farbstoff und/oder einen polymeren Zusatz, der in den meisten Fällen ebenso schnell das Eintrocknen bewirkt, wenngleich die Moleküle der üblicherweise bei Markierflüssigkeiten verwendeten Farbstoffe kleiner als die des hier gewählten Polymers sind. Gleichwohl enthalten insbesondere Tuschen Harze und andere polymere Bestandteile, deren Verhalten dem des Polyvinylpyrrolidons sehr stark gleicht.

Soll eine Markierflüssigkeit lange anschreibbereit gehalten werden, die einen normalerweise zum Verkleben neigenden Farbstoff enthält, muß man so viel kristallisierendes Antiblockadditiv hinzufügen, bis genügend Moleküle des Antiblockadditives zwischen den Farbstoffmolekülen das Verkleben verhindern. Dabei sollte das Verhältnis zwischen Farbstoff und Antiblockadditiv genau ermittelt werden, damit es im Gemisch einerseits nicht zu einer ausblühenden Kristallbildung kommt, andererseits aber eine möglichst gute Offenlagerfähigkeit erhalten bleibt. Darüberhinaus sollte der Farbstoff und das Antiblockadditiv zusammen möglichst viele Flüssigkeitsmoleküle im Kristallverbund festhalten, damit die Grenzschicht eine weiche Struktur aufweist. Es sei jedoch darauf hingewiesen, daß erfindungsgemäß erzielbare Vorteile, wenn auch nicht in bester Weise, auch dann erreicht werden können, wenn die Mengenverhältnisse von Farbstoff und gegebenenfalls Harz etc. auf der einen Seite und erfindungsgemäß verwendeten Feststoff nicht optimal aufeinander abgestimmt sind.

Die erfindungsgemäß verwendeten Feststoffe können insbesondere in Tuschen eingesetzt werden, welche folgende Basiszusammensetzung (ohne erfindungsgemäßen Feststoff):
5 - 20 Gew.-% Pigmente
5 - 30 Gew.-% Harz
0 - 50 Gew.-% Alkohol
Rest Wasser, übliche Zusätze und gegebenenfalls zusätzliche Farbstoffe.

Vorteilhafte Markierflüssigkeiten sind beispielsweise:
eine wie oben beschriebene Tusche + 5 bis 20 Gew.-% Glycin. Tinte auf Basis Spiritus/Ethylmethylketon mit gelöstem Farbstoff + Phenanthren,
Anhand der folgenden Beispiele werden die zeitliche Länge der Anschreibbereitschaft jeweils mit und ohne Antiblockadditiv verdeutlicht. Alle Markierflüssigkeiten wurden in Schreibgeräten mit Filterspeicher und Faserspitze eingefüllt.
a) Wasser als Lösungsmittel
   - Farbstoff :: Duasyn-Direktblau FBL0l (Direct Blue 199)
   - Additiv :: Diammoniumhydrogenphosphat (NH₄)₂HPO₄
   - Mischungen:: - 5% Duasyn-Direktblau, 95 % Wasser, Offenlagerfähigkeit: ca. 1/2 h
   - 5% Duasyn-Direktblau, 7 % Diammoniumhydrogenphosphat, 88% Wasser Offenlagerfähigkeit: min. 2 d
b) Ethanol als Lösungsmittel
   - Farbstoff:: Neozapon rot 335 (Solvent red 122, Cl 12716:1)
   - Additiv :: Diphenylcarbinol (C₆H₅)₂CHOH
   - Mischungen:: - 15% Neozapon rot 335, 85% Ethanol Offenlagenfähigkeit: ca. 4 h
   - 15% Neozapon rot 335, 10% Diphenylcarbinol, 75% Ethanol Offenlagerfähigkeit: min. 4 d
c) Trichlorethan als Lösungsmittel
   - Farbstoff :: Sudan schwarz (Solvent block 3, Cl 26150)
   - Additiv :: Dipnenylcarbonat (C₆H₅O)₂CO
   - Mischungen:: - 12% Sudan schwarz, 88% 1,1,1-Trichlorethan Offenlagefähigkeit: ca. 1/2 h
   - 12% Sudan schwarz, 15% Diphenylcarbonat, 73% 1,1,1-Trichlorethan Offenlagerfähigkeit: min 2 d

## Patentansprüche

1. Verwendung von Feststoffen für übliche Markierflüssigkeiten für Schreibgeräte mit kapillarer Austrittsöffnung, wobei die Markierflüssigkeiten ein Lösungsmittel oder Lösungsmittelgemisch, einen darin gelösten Farbstoff und/oder ein Farbpigment und gegebenenfalls einen Hochsieder enthalten und wobei die Feststoffe
in dem Lösungsmittel oder Lösungsmittelgemisch löslich sind,
einen Schmelzpunkt ≧ 30 °C und ein Molekulargewicht ≦ 1000 Dalton besitzen und
in der Lage sind, falls sie im Lösungsmittel oder im Lösungsmittelgemisch alleine vorliegen, an der kapillaren Austrittsöffnung unter Bildung auswachsender Kristallite zu kristallisieren,
mit Ausnahme von Zuckern, Zuckerderivaten, Ascorbinsäure, Ascorbinsäurederivaten, Harnstoff, Harnstoffderivaten einschließlich Ethylenharnstoff, Thioharnstoff, Thioharnstoffderivaten, Alkylamiden der Formel R-C(O)-NH₂ mit R=Alkyl und Hexandiol-1,6,
als Antiblockadditiv für derartige Markierflüssigkeiten in einer Menge von mindestens 1 - 50 Gew.-%, **dadurch gekennzeichnet** bezogen auf die Endzusammensetzung der Markierflüssigkeit, zum schützenden und verdunstungshemmenden Verschluß der offenen und nicht benutzten kapillaren Austrittsöffnung.

2. Verwendung nach Anspruch 1,
**dadurch gekennzeichnet**,
daß der als Antiblockadditiv dienende Feststoff einen Schmelzpunkt ≧ 50 °C besitzt.

3. Verwendung nach Anspruch 1 oder 2,
**dadurch gekennzeichnet**,
daß der als Antiblockadditiv dienende Feststoff ein Molekulargewicht ≦ 500 Dalton besitzt.

4. Verwendung nach mindestens einem der Ansprüche 1 bis 3,
**dadurch gekennzeichnet**,
daß der als Antiblockadditiv dienende Feststoff ein anorganisches Salz, eine organische Säure, eine Aminosäure, eine iso-, poly- oder heterocyklische organische Verbindung und/oder eine Schwefelverbindung ist.

5. Verwendung nach mindestens einem der Ansprüche 1 bis 4 für Tinten und Tuschen mit Wasser als Lösungsmittel, das gegebenenfalls mit einem üblichen Alkohol, Ether, Ester, Keton, Glykol und/oder Glykolester oder -ether versetzt ist und gegebenenfalls einen üblichen Zusatz enthält,
**dadurch gekennzeichnet**,
daß der als Antiblockadditiv dienende Feststoff Diammoniumhydrogenphosphat, Citronensäure, Carbamidsäure, ein Carbamidsäurederivat, wie Carbamidsäuremethylester, Dimethylsulfon, Benzoesäure oder ein übliches Derivat davon, Glycin, Diglycin, Phenylglycin, Alanin, Histidin, Tyrosin, Imidazol oder ein Oligopeptid mit bis zu 12 Aminosäuren ist.

6. Verwendung nach mindestens einem der Ansprüche 1 bis 4 für Tinten und Tuschen mit einem Alkohol-, Ether, Keton- und/oder Ester-Lösungsmittel, das jedoch gegebenenfalls Wasser als Co-Lösungsmittel sowie gegebenenfalls einen üblichen Zussatz enthält,
**dadurch gekennzeichnet**,
daß der als Antiblockadditiv dienende Feststoff Phenanthren oder ein Derivat davon, Benzoesäure oder ein Derivat davon oder eine isocyklische, polycyklische oder heterocyklische organische Verbindung ist.

7. Markierflüssigkeit für Schreibgeräte mit einer üblichen kapillaren Austrittsöffnung für die Markierflüssigkeit, die aus einem üblichen Lösungsmittel oder Lösungsmittelgemisch, das gegebenenfalls auch einen Hochsieder enthält, und einem in derartigen Markierflüssigkeiten einsetzbaren üblichen, löslichen Farbstoff und/oder üblichen Farbpigment aufgebaut ist und gegebenenfalls übliche Zusätze enthält,
**gekennzeichnet durch**
1 - 50 Gew.-%, bezogen auf die Endzusammensetzung der Markierflüssigkeit, eines als Antiblockadditiv dienenden Feststoffes,
der in dem Lösungsmittel oder Lösungsmittelgemisch löslich ist,
einen Schmelzpunkt ≧ 30 °C und ein Molekulargewicht ≦ 1000 Dalton besitzt und
in der Lage ist, falls er im Lösungsmittel oder im Lösungsmittelgemisch alleine vorliegt, an der kapillaren Austrittsöffnung unter Bildung auswachsender Kristallite zu kristallisieren,
mit Ausnahme von Zuckern, Zuckerderivaten, Ascorbinsäure, Ascorbinsäurederivaten, Harnstoff, Harnstoffderivaten einschließlich Ethylenharnstoff, Thioharnstoff, Thioharnstoffderivaten, Alkylamiden der Formel R-C(O)-NH₂ mit R=Alkyl und Hexandiol-1,6.

8. Markierflüssigkeit nach Anspruch 7,
dadurch **gekennzeichnet,**
daß sie einen in einem der Ansprüche 2 bis 4 beschriebenen Feststoff als Antiblockadditiv enthält.

9. Markierflüssigkeit nach Anspruch 7 oder 8 in Form einer Tinte oder Tusche mit Wasser als Lösungsmittel, das gegebenenfalls mit einem üblichen Alkohol, Ether, Ester, Keton, Glykol und/oder Glykolester oder -ether versetzt ist und gegebenenfalls einen üblichen Zusatz enthält,
dadurch **gekennzeichnet**,
daß sie als Feststoff, der als Antiblockadditiv dient, Diammoniumhydrogenphosphat, Citronensäure, Carbamidsäure, ein Carbamidsäurederivat, wie Carbamidsäuremethylester, Dimethysulfon, Benzosaüre oder ein ubliches Derivat davon, 20 Glycin, Diglycin, Phenylglycin, Alanin, Histidin, Tyrosin, Imidazol oder ein Oligopeptid mit bis zu 12 Aminosäuren enthält.

10. Markierflüssigkeit nach Anspruch 7 oder 8 in Form einer Tinte oder Tusche mit einem Alkohol-, Ether-, Keton- und/oder Ester-Lösungsmittel, das jedoch gegebenenfalls Wasser als Co-Lösungsmittei sowie gegebenenfalls einen üblichen Zussatz enthält,
**dadurch gekennzeichnet**,
daß sie als Feststoff, der als Antiblockadditiv dient, Phenanthren oder ein Derivat davon, Benzoesäure oder ein Derivat davon oder eine isocyklische, polycyklische oder heterocyklische organische Verbindung enthält.

## Claims

1. Use of solids for common marking fluids for writing instruments having a capillary outlet opening said marking fluids containing a solvent or solvent mixture, a dye dissolved in said solvent or solvent mixture and/or a pigment, and, if desired, a component having a high boiling point
whereby said solids
are soluble in said solvent or solvent mixture,
have a melting point ≥ 30° C and a molecular weight ≤ 1000 Dalton and, in case they are present alone in said solvent or solvent mixture, are capable of crystallizing at the capillary outlet opening under the formation of growing crystals
with the exception of sugars, sugar derivatives, ascorbic acid, ascorbic acid derivatives, urea, urea derivatives including ethyleneurea, thiourea, thiourea derivatives, alkylamides of the formula R-C(O)-NH₂ with R = alkyl and hexanediol-1,6,
as an antiblocking additive for said marking fluids in an amount of at least 1 - 50 % by weight, based on the final composition of the marking fluid, for providing a protective and anti-evaporating closure of the open and unused capillary outlet opening.

2. Use according to claim 1,
**characterized in that**
the solid serving as an antiblocking additive has a melting point ≥ 50°C.

3. Use according to claim 1 or 2,
**characterized in that**
the solid serving as an antiblocking additive has a molecular weight ≤ 500 Dalton.

4. Use according to at least one of the claims 1 to 3,
**characterized in that**
the solid serving as an antiblocking additive is an inorganic salt, an organic acid, an amino acid, an isocyclic, polycyclic or heterocyclic organic compound and/or a sulfur compound.

5. Use according to at least one of the claims 1 to 4 for inks and China inks having water as a solvent which is, if desired, admixed with at least one common alcohol, ether, ester, ketone, glycol and/or a glycol ester or glycol ether and which may contain a common additive,
**characterized in that**
the solid serving as an antiblocking additive is diammonium hydrogen phosphate, citric acid, carbamic acid, carbamic acid derivative, such as carbamic acid methyl ester, dimethyl sulfon, benzoic acid or a common derivative thereof, glycine, diglycine, phenylglycine, alanin, histidin, tyrosin, imidazol or an oligo peptide having up to 12 amino acids.

6. Use according to at least one of the claims 1 to 4 for inks and China inks with an alcohol, ether, ketone and/or ester solvent which may contain water as a co-solvent and which may also contain a common additive
**characterized in that**
the solid serving as an antiblocking additive is phenantren or a derivative thereof, benzoic acid or a derivative thereof or an isocyclic, polycyclic or heterocyclic organic compound.

7. Marking fluid for writing instruments having a common capillary outlet opening for said marking fluid which is composed of a common solvent or solvent mixture containing, if desired, a component having a high boiling point, and of a common soluble dye and/or common pigment as used in such marking fluids, whereby the marking fluid may also contain common additives,
**characterized by**
1 to 50 % by weight, based on the final composition of the marking fluid, of a solid serving as an antiblocking additive which is soluble in said solvent or solvent mixture,
has a melting point ≥ 30°C and a molecular weight ≤ 1000 Dalton and
in case it is present alone in said solvent or solvent mixture is capable of crystallizing at the capillary outlet opening under the formation of growing crystals
with the exception of sugar, sugar derivatives, ascorbic acid, ascorbic acid derivatives, urea, urea derivatives including ethyleneurea, thiourea, thiourea derivatives, alkylamides of the formula R-C(O)-NH₂ with R = alkyl and hexanediol-1,6.

8. Marking fluid according to claim 7,
**characterized in that**
it contains a solid described in one of claims 2 to 4 as antiblocking additive.

9. Marking fluid according to claim 7 or 8 in the form of an ink or China ink having water as solvent, which, if desired, is admixed with a common alcohol, ether, ester, ketone, glycol and/or a glycol ester or glycol ether and which may contain a common additive,
**characterized in that**
it contains as solid serving as an antiblocking additive diammonium hydrogen phosphate, citric acid, carbamic acid, a carbamic acid derivative, such as carbamic acid methyl ester, dimethyl sulfon, benzoic acid or a common derivative thereof, glycine, diglycine, phenylglycin, alanin, histidin, tyrosin, imidazol and a oligo peptide having up to 12 amino acids.

10. Marking fluid according to claim 7 or 8 in the form of an ink or China ink having an alcohol, ether, ketone and/or ester as solvent which may contain water as co-solvent and, if desired, a common additive,
**characterized in that**
it contains as solid serving as an antiblocking additive phenanthren or a derivative thereof, benzoic acid or a derivative thereof or an isocyclic, polycyclic or heterocyclic organic compound.

## Revendications

1. Utilisation de matières solides, pour liquides usuels d'écriture destinés à des instruments d'écriture à orifice de sortie capillaire, les liquides d'écriture contenant un solvant ou un mélange de solvants, un colorant dissous dans ce dernier et/ou un pigment coloré, et éventuellement un composé à haut point d'ébullition, et dans lesquels les matières solides sont solubles dans le solvant ou dans le mélange de solvants, ont un point de fusion supérieur ou égal à 30°C et une masse moléculaire inférieure à 1000 dalton; et peuvent, si elles se trouvent seules dans le solvant ou dans le mélange de solvants, cristalliser sur l'orifice de sortie capillaire avec formation de cristallites présentant une croissance, à l'exception des sucres, des dérivés du sucre, de l'acide ascorbique, des dérivés de l'acide ascorbique, de l'urée, des dérivés de l'urée, y compris de l'éthylèneurée, de la thiourée, des dérivés de la thiourée, des alkylamides de formule R-C(0) - NH₂ avec R = alkyl et de l'hexandiol- 1,6, en tant qu'additif anti-blocage pour liquides d'écriture de ce type, en une quantité d'au moins 1 à 50% en poids, par rapport à la composition finale du liquide d'écriture, pour assurer une obturation protectrice et empêchant l'évaporation, de l'orifice de sortie capillaire ouvert et non utilisé.

2. Utilisation selon la revendication 1, caractérisée en ce que la matière solide servant d'additif anti-blocage a un point de fusion supérieur ou égal à 50°C.

3. Utilisation selon la revendication 1 ou 2, caractérisée en ce que la matière solide servant d'additif anti-blocage a une masse moléculaire inférieure ou égale à 500 dalton.

4. Utilisation selon au moins l'une des revendications 1 à 3, caractérisée en ce que la matière solide servant d'additif anti-blocage est un sel minéral, un acide organique, un acide aminé, un composé organique iso-, poly- ou hétérocyclique, et/ou un composé du soufre.

5. Utilisation selon au moins l'une des revendications 1 à 4, pour encres ou encres de Chine, avec de l'eau en tant que solvant, additionnée éventuellement d'un alcool usuel, d'un éther, d'un ester, d'une cétone, d'un glycol et/ou d'un ester, d'un éther de glycol, et contenant éventuellement un additif supplémentaire, caractérisée en ce que la matière solide servant d'additif anti-blocage est l'hydroqénophosphate diammonique, l'acide citrique, l'acide carbamique, un dérivé de l'acide carbamique tel que le carbamate de méthyle, la diméthylsulfone, l'acide benzoïque ou l'un de ses dérivés usuels, la diglycine, la phénylglycine, l'alanine, l'histidine, la tyrosine, l'imidazole ou un oligopeptide ayant jusqu'à 12 acides aminés.

6. Utilisation selon au moins l'une des revendications 1 à 4, pour des encres et encres de Chine, avec un solvant de type alcool, éther, cétone et/ou ester, qui cependant contient éventuellement de l'eau en tant que co-solvant et éventuellement un additif usuel, caractérisée en ce que la matière solide servant d'additif anti-blocage est le phénanthrène ou l'un de ses dérivés, l'acide benzoïque ou l'un de ses dérivés, ou un composé organique isocyclique, polycyclique ou hétérocyclique.

7. Liquide d'écriture pour instruments d'écriture comportant un orifice de sortie capillaire usuel pour le liquide d'écriture, lequel est constitué d'un solvant ou d'un mélange de solvants usuel contenant éventuellement encore un composé à haut point d'ébullition, et d'un colorant soluble usuel pouvant être utilisé dans les liquides d'écriture de ce type et/ou d'un pigment coloré usuel, et contient éventuellement des additifs usuels,
caractérisé en ce qu'il contient de 1 à 50% en poids, par rapport à la composition finale du liquide d'écriture, d'une matière solide servant d'additif anti-blocage, lequel est soluble dans le solvant ou dans le mélange de solvants ; en ce qu'il a un point de fusion supérieur ou égal à 30° C et une masse moléculaire inférieure ou égale à 1000 dalton; et en ce qu'il peut, si elle est présente seule dans le solvant ou dans le mélange de solvants, se cristalliser au niveau de l'orifice de sortie capillaire pour former des cristallites pouvant subir une croissance, à l'exception des sucres, des dérivés du sucre, de l'acide ascorbique, des dérivés de l'acide ascorbique, de l'urée, des dérivés de l'urée, y compris de l'éthylèneurée, de la thiourée, des dérivés de la thiourée, des alkylamides de formule R-C(0) - NH₂ avec R = alkyl et de l'hexandiol -1,6.

8. Liquide d'écriture selon la revendication 7, caractérisé en ce qu'il contient en tant qu'additif antiblocage une matière solide, selon l'une des revendications 2 à 4.

9. Liquide d'écriture selon la revendication 7 ou 8, sous forme d'une encre ou d'une encre de Chine, avec de l'eau servant de solvant, éventuellement additionnée d'un alcool usuel, d'un éther, d'un ester, d'une cétone, d'un glycol et/ou d'un ester ou d'un éther de glycol et contenant éventuellement un additif usuel, caractérisé en ce que la matière solide servant d'additif anti-blocage et qui y est contenue est l'hydroqénophosphate diammonique, l'acide citrique, l'acide carbamique, un dérivé de l'acide carbamique tels que le carbamate de méthyle, la diméthylsulfone, l'acide benzoïque ou l'un de ses dérivés usuels, la glycine, la diglycine, la phénylglycine, l'alanine, l'histidine, la tyrosine, l'imidazole ou un oligo peptide ayant jusqu'à 12 acides aminés.

10. Liquide d'écriture selon la revendication 7 ou 8, sous forme d'une encre ou d'une encre de Chine, avec un solvant du type alcool, éther, cétone et/ou ester, qui cependant contient éventuellement de l'eau comme co-solvant et éventuellement un additif usuel, caractérisé en ce qu'il contient comme matière solide servant d'additif anti-blocage du phénanthrène ou l'un de ses dérivés, de l'acide benzoïque ou l'un de ses dérivés, ou un composé organique isocyclique, polycyclique ou hétérocyclique.
